# EUROPEAN PATENT SPECIFICATION

(11) **EP 4 467 496 B1**
(45) Date of publication and mention of the grant of the patent: **29.07.2026**
(21) Application number: 23860809.5
(22) Date of filing: 28.08.2023
(51) Int. Cl.: B65H 35/06, H01M 4/04, B26D 7/18, B26D 5/00, B26D 1/09, B26D 1/06, B26D 7/26, B26D 5/28, B26D 5/24, H01M 10/04, B65H 20/02, B65H 23/26, B65H 43/04, B65H 29/00

(54) **CUTTING APPARATUS FOR ELECTRODE SUBSTRATE**
SCHNEIDVORRICHTUNG FÜR EIN ELEKTRODENSUBSTRAT
APPAREIL DE COUPE POUR SUBSTRAT D'ÉLECTRODE

(30) Priority: 31.08.2022 KR 20220109800
(43) Date of publication of application: 27.11.2024
(73) Proprietor: LG Energy Solution, Ltd., Seoul 07335 (KR)
(72) Inventor: KIM, Yang Lae, Daejeon 34122 (KR); KIM, Woong Ki, Daejeon 34122 (KR); LEE, Young Soo, Daejeon 34122 (KR); CHOI, Dong Soon, Daejeon 34122 (KR); HAN, Do Seong, Daejeon 34122 (KR); PARK, Sang Eun, Daejeon 34122 (KR)
(74) Representative: Goddar, Heinz J.
(86) International application number: PCT/KR2023/012708
(87) International publication number: WO 2024/049133

(56) References cited:
- JP-A- 2019 121 536
- JP-B2- 3 088 761
- KR-A- 20180 119 946
- KR-A- 20210 147 658
- KR-A- 20220 112 893

## Description

### Technical Field

The present invention relates to a cutting device for an electrode base material, and specifically, relates to a cutting device for an electrode base material capable of removing and recovering defective electrodes containing defective portions while cutting the electrode base material into a plurality of unit electrodes.

The present application claims the benefit of priority based on Korean Patent Application No. 10-2022-0109800 dated August 31, 2022.

### Background Art

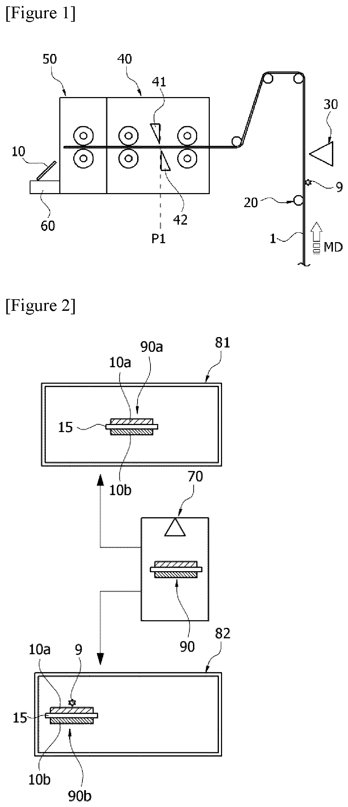

Figure 1 is a configuration diagram of a conventional cutting device for an electrode base material cutting an electrode base material (1) into unit electrodes (10), and Figure 2 is a schematic diagram showing a process of inspecting a unit cell (90).

A battery cell comprises an electrode assembly and a case protecting the electrode assembly.

Referring to Figures 1 and 2, the electrode assembly comprises a plurality of unit cells (90), where each unit cell (90) comprises a negative electrode (10a), a separator (15), and a positive electrode (10b), and has a laminated structure so that the separator (15) is located between the negative electrode (10a) and the positive electrode (10b). In addition, the unit cell (90) may comprise a mono-cell or half-cell.

The positive electrode (10b) and the negative electrode (10a) used in the unit cell (90) are each manufactured as the electrode base material (1) coated with a positive electrode active material or a negative electrode active material is cut into a plurality of unit electrodes (10).

In addition, hereinafter, for convenience of explanation, both the positive electrode (10b) and the negative electrode (10a) constituting the unit cell are collectively referred to as the unit electrode (10).

Referring to Figure 1, a conventional cutting device for an electrode base material comprises a transfer roll (20), a defect sensing sensor (30), a cutting part (40), an electrode discharge part (50), and an electrode storage part (60).

The electrode base material (1) travels toward the cutting part (40) along a plurality of transfer rolls (20). The defect sensing sensor (30) is disposed on a path (MD) where the electrode base material (1) travels toward the cutting part (40). The defect sensing sensor (30) senses defective portions of the traveling electrode base material (1).

In the cutting part (40), the electrode base material (1) is cut into a plurality of unit electrodes (10) meeting the specifications of the battery cell. The cutting part (40) comprises a pair of cutting members (41, 42), where the pair of cutting members (41, 42) cuts the electrode base material (1) while moving in a direction closer to each other, and moves in a direction away from each other after cutting completion of the electrode base material (1).

The cutting part (40) is mounted on the front end of the electrode discharge part (50). The electrode discharge part (50) is provided to discharge the unit electrode (10) cut at the cutting part (40) to the electrode storage part (60).

In this way, the cutting part (40) has a structure in contact with the electrode discharge part (50), whereby even if the defect sensing sensor (30) senses a defect existing in the electrode base material (1), it has been difficult to separately remove only the defective portion (9) of the electrode base material (1) during the cutting process of the electrode base material (1).

In such a structure, the electrode discharge part (50) discharges poor electrodes with the defective portion (9) and good electrodes without the defective portion (9) of the unit electrodes (10) together into the electrode storage part (60).

As a result, the poor electrodes are mixed with the good electrodes to be supplied to an assembly process of the unit cells (90). When the assembly of the unit cells (90) is completed, it is inspected in a vision inspection part (70) whether the unit cells (90) are normal or defective.

In addition, if the unit cell (90) is determined to be normal in the vision inspection part (70), the normal unit cell (90a) is transferred to a normal part (81). Otherwise, if the unit cell (90) is determined to be defective in the vision inspection part (70), the defective unit cell (90b) is transferred to a defect part (82).

In this instance, if a defective portion (9) exists in the negative electrode (10a) and/or the positive electrode (10b) constituting the unit cell (90b), the vision inspection part (70) determines the relevant unit cell as defective.

For example, even if the defective portion (9) exists only in the negative electrode (10a), the relevant unit cell (90b) is determined to be defective, and thus the positive electrode (10b) and the separator (15), which are good, are subjected to loss, unnecessarily.

Therefore, there is a need for a technology to check in advance whether the unit electrode (positive electrode or negative electrode) supplied to a unit cell stack process is defective, and to remove and recover the defective electrode.

### Disclosure

### Technical Problem

To solve such problems, the present invention is intended to provide a cutting device for an electrode base material capable of removing defective electrodes, in which defective portions are included, of unit electrodes while cutting the electrode base material into unit electrodes.

Also, the present invention is intended to provide a cutting device for an electrode base material capable of collecting only normal electrodes among unit electrodes to supply them to a next process.

In addition, the present invention is intended to provide a cutting device for an electrode base material capable of collecting and recovering only defective electrodes.

### Technical Solution

In order to solve the above-described problems, a cutting device for an electrode base material according to one example of the present invention comprises a travel motion part guiding a travel motion of the electrode base material along a travel motion path, a defect sensing part disposed on the travel motion path and provided to sense defective portions of the electrode base material, a cutting part provided to cut the electrode base material into a plurality of unit electrodes, provided to be movable along the travel motion path, and provided so that a good product cutting position for cutting a normal electrode among the plurality of unit electrodes and a defect cutting position for cutting a defective electrode including the defective portion are different, an electrode discharge part provided to discharge to the outside the normal electrode cut at the good product cutting position, and a defect recovery part in which the defective electrode cut at the defect cutting position is stored.

### Advantageous Effects

As discussed above, the cutting device for an electrode base material related to one example of the present invention has the following effects.

In a process of cutting the electrode base material into a plurality of unit electrodes, it is possible to remove defective electrodes containing defective portions among the unit electrodes based on defect sensing information from a defect sensing part.

Also, by providing a cutting part to be movable along the travel motion path of the electrode base material, a good product cutting position for cutting a normal electrode among the plurality of unit electrodes and a defect cutting position for cutting a defective electrode including a defective portion can be set differently.

In such a structure, the normal electrode cut at the good product cutting position can be discharged to an electrode discharge part, and the defective electrode cut at the defect cutting position can be discharged to the defect recovery part.

Accordingly, only the good electrodes among the plurality of unit electrodes can be collected and supplied to a next process, and only the defective electrodes can be collected and recovered separately.

In addition, by removing defective electrodes in advance before being supplied to a unit cell manufacturing process, it is possible to prevent defective electrodes from being determined as defective after they are stacked in the form of unit cells.

### Description of Drawings

Figure 1 is a configuration diagram of a conventional cutting device for an electrode base material cutting the electrode base material into unit electrodes.
Figure 2 is a schematic diagram showing a process of inspecting a unit cell.
Figure 3 is a schematic configuration diagram of a cutting device for an electrode base material according to one example of the present invention.
Figure 4 is a schematic diagram for explaining normal electrodes and defective electrodes among a plurality of unit electrodes.
Figure 5 is a schematic perspective diagram showing a defect recovery part at a defect cutting position.
Figures 6 to 8 are schematic diagrams for explaining one operating state of a cutting device for an electrode base material at a defect cutting position.

### Mode for Invention

Hereinafter, with reference to the accompanying drawings, a cutting device for an electrode base material related to one example of the present invention will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

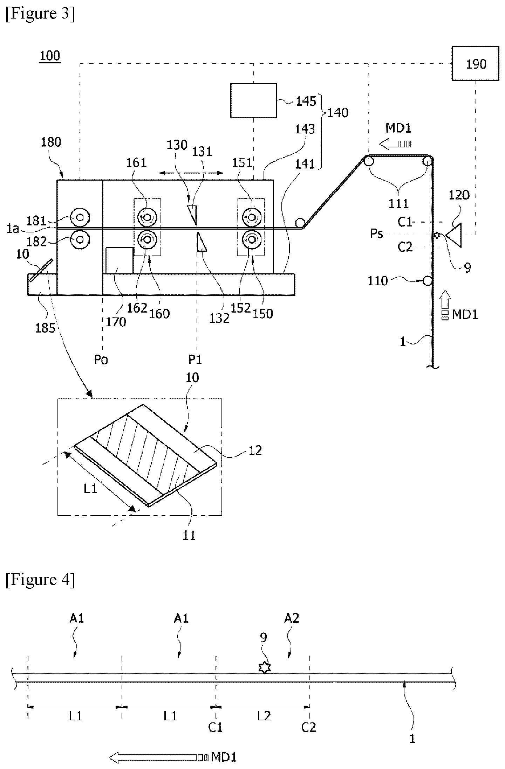

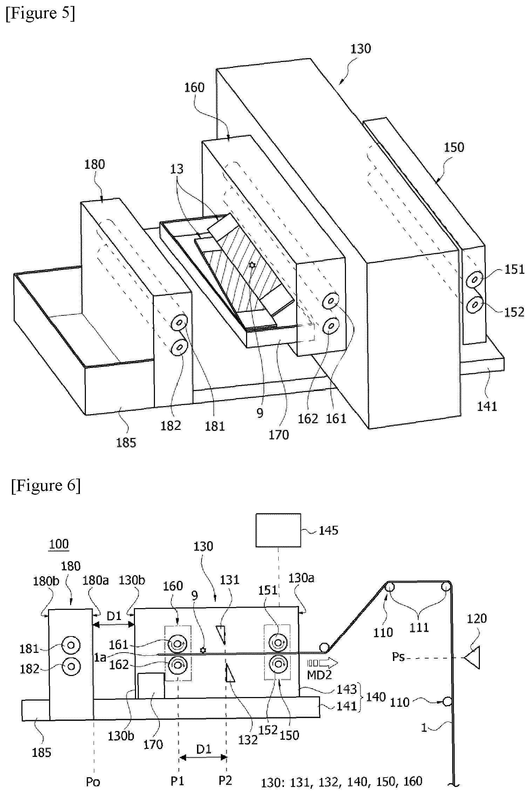

Figure 3 is a schematic configuration diagram of a cutting device for an electrode base material according to one example of the present invention, Figure 4 is a schematic diagram for explaining normal electrodes and defective electrodes among a plurality of unit electrodes, and Figure 5 is a schematic perspective diagram showing a defect recovery part at a defect cutting position.

In addition, Figure 3 illustrates a state where a cutting part (130) is located at a good product cutting position (P1).

The cutting device (100) for an electrode base material according to one example of the present invention is a device cutting the electrode base material (1) while traveling along a traveling direction (MD1) into a plurality of unit electrodes (A1, A2).

The respective unit electrodes (A1, A2) may be cut to have predetermined lengths (L1, L2) along the traveling direction (MD1). For example, all the respective unit electrodes (A1, A2) may be cut to have the same length (L1, L2). In addition, the normal electrode among the unit electrodes (A1) and the defective electrode including the defective portion (9) among the unit electrodes (A2) may be cut to have the same length.

Also, the cutting device (100) for an electrode base material is provided so that by sensing the defective portion (9) of the electrode base material (1) while traveling, the normal electrode (10), which is a good product, and the defective electrode (13) including the defective portion (9) among the plurality of unit electrodes (A1, A2) are separated, and each collected. In addition, the normal electrode (10) may be an electrode that does not include the defective portion (9).

In this document, the electrode base material (1) may be a positive electrode base material or a negative electrode base material. In addition, each unit electrode (A1, A2) may include a coated portion (11) and an uncoated portion (12), and depending on the material of the coated portion (11), the unit electrodes (A1, A2) may be decided as a negative electrode or a positive electrode.

The cutting device (100) for an electrode base material according to one example of the present invention comprises a travel motion part (100) guiding a travel motion of the electrode base material along a travel motion path, and a defect sensing part (120) disposed on the travel motion path and provided to sense the defective portion (9) of the electrode base material (1) while traveling.

The travel motion part (110) comprises a plurality of roll members (111). The plurality of roll members may be spaced apart along the travel motion path of the electrode base material (1), and the travel motion part (110) may be provided in a roll-to-roll manner.

In addition, the defect sensing part (120) may be provided to sense the defective portion (9) in the electrode base material (1) in a scanning manner or a vision inspection manner. For example, the defect sensing part (120) may comprise one or more vision cameras.

Figures 6 to 8 are schematic diagrams for explaining one operating state of a cutting device for an electrode base material at a defect cutting position.

The cutting device (100) for an electrode base material comprises a cutting part (130) provided to cut the electrode base material (1) into a plurality of unit electrodes (A1, A2), and provided to be movable along the travel motion path.

The cutting part (130) is provided so that a good product cutting position (P1) for cutting normal electrodes (10) among the plurality of unit electrodes (A1, A2) and a defect cutting position (P2) for cutting defective electrodes including defective portions are different on the travel motion path. The cutting part (130) is provided to be capable of reciprocating between the good product cutting position (P1) and the defect cutting position (P2).

In this instance, when the cutting part (130) is located at the good product cutting position (P1), it cuts the electrode base material (1) into the normal electrode (10), and when the cutting part (130) is located at the defect cutting position (P2), it cuts the electrode base material (1) into the defective electrode (13).

Also, the cutting device (100) for an electrode base material comprises an electrode discharge part (180) provided to discharge to the outside the normal electrode (10) cut at the good product cutting position (P1), and a defect recovery part (170) in which the defective electrode (13) cut at the defect cutting position (P2) is stored.

In addition, the cutting part (130) comprises a pair of cutting members (131, 132) provided to cut the electrode base material (1). The pair of cutting members (131, 132) may be provided to be movable to the good product cutting position (P1) and the defective product cutting position (P2).

The cutting part (130) has an entry end (130a) into which the electrode base material (1) enters and a discharge end (130b) through which the unit electrode cut by the pair of cutting members (131, 132) is discharged.

Also, the electrode discharge part (180) is located at the discharge end (130b) of the cutting part (130), and is provided to discharge the normal electrode (10) cut at the good product cutting position (P1) to the outside.

In addition, the electrode discharge part (180) has an entry end (180a) into which the normal electrode (10) enters and a discharge end (180b) through which the entered normal electrode (10) is discharged to the outside. In this instance, the electrode discharge part (180) is disposed so that the entry end (180a) faces the discharge end (130b) of the cutting part (130). Furthermore, as the cutting part (130) is provided to be movable, the gap between the entry end (180a) of the electrode discharge part (180) and the discharge end (130b) of the cutting part (130) may be adjusted.

When the cutting part (130) moves from the good product cutting position (P1) to the defect cutting position (P2), the cutting part (130) may be provided to move in a direction away from the electrode discharge part (180).

Referring to Figure 3, the gap between the entry end (180a) of the electrode discharge part (180) and the discharge end (130b) of the cutting part (130) may be minimized at the good product cutting position (P1), and referring to Figure 6, the gap between the entry end (180a) of the electrode discharge part (180) and the discharge end (130b) of the cutting part (130) may be maximized at the defect cutting position (P2).

In such a structure, referring to Figure 3, the cutting part (130) and the electrode discharge part (180) are provided to be connected at the good product cutting position (P1) so that the normal electrode (10) cut at the good product cutting position (P1) is delivered to the electrode discharge part (180).

Also, the electrode discharge part (180) may comprise a pair of discharge rolls (181, 182) for guiding the travel motion of the normal electrode (10), and an electrode storage part (185) storing the normal electrode (10) passing through the pair of discharge rolls (181, 182).

In addition, referring to Figures 6 to 8, the cutting part (130) and the electrode discharge part (180) are provided to be disconnected at the defect cutting position (P2) so that the defective electrode (13) cut at the defect cutting position (P2) is not delivered to the electrode discharge part (180).

Furthermore, the cutting device (100) for an electrode base material comprises a defect recovery part (170) in which the defective electrode (13) cut at the defect cutting position (P2) is stored.

In such a structure, the normal electrode (10) cut at the cutting part (130) is delivered to the electrode discharge part (180) and then stored in the electrode storage part (185), and the defective electrode (13) cut at the cutting part (130) is stored in the defect recovery part (170), so that the normal electrode (10) and the defective electrode (13) can be collected separately.

Referring to Figure 5, when the cutting part (130) moves to the defect cutting position (P2), the defect recovery part (170) may be provided to be exposed to the space between the cutting part (130) and the electrode discharge part (180) at the defect cutting position (P2). At this time, the defective electrode (13) stored in the defect recovery part (170) can be collected to the outside of the device (100).

In addition, the cutting part (130) may comprise a pair of cutting members (131, 132), and a rear-end roll part (160) disposed between the pair of cutting members (131, 132) and the electrode discharge part (180).

In this instance, when the cutting part (130) is located at the good product cutting position (P1), the rear-end roll part (160) is provided to push the normal electrode (10) to the electrode discharge part (180) at the good product cutting position (P1). That is, at the good product cutting position (P1), the normal electrode is delivered from the cutting part (130) to the electrode discharge part (180), and the cutting part (130) and the electrode discharge part (180) remain in a connected state.

In addition, when the cutting part (130) is located at the defect cutting position (P2), the rear-end roll part (160) may be provided to push the defective electrode from the defect cutting position (P2) to the defective recovery part (170). That is, at the defect cutting position (P2), the defective electrode (13) is not delivered from the cutting part (130) to the electrode discharge part (180), and the cutting part (130) and the electrode discharge part (180) remain in a disconnected state.

The defect recovery part (170) may be provided at a location where the defective electrode (13) passing through the rear-end roll part (160) falls, and thus is stored. The defect recovery part (170) may be provided in the form of a box opened at the top.

In addition, the cutting part (130) may comprise a position adjusting part (140) adjusting the position of the pair of cutting members (131, 132) along the travel motion path.

The position adjusting part (140) may adjust the position of the pair of cutting members (131, 132) so that the pair of cutting members (131, 132) is located at the good product cutting position (P1) or the defect cutting position (P2).

The position adjusting part (140) may comprise a rail (141), and a main body part (143) movably provided on the rail (141) and on which the pair of cutting members (131, 132) is mounted.

Also, the main body part (143) may be provided with the rear-end roll part (160), and may be provided so that the pair of cutting members (131, 132) and the rear-end roll part (160) move integrally along the rail (141). That is, when the cutting part (130) moves through the position adjusting part (140), the pair of cutting members (131, 132) and the rear-end roll part (160) respectively mounted on the main body part (143) may be moved integrally with the main body part (143).

In addition, the rail (141) may be connected to the electrode discharge part (180), and the rail (141) may be disposed at the bottom of the travel motion path.

Furthermore, the main body part (143) may be movably mounted on the rail (141), and the main body part (143) may be connected to the main body driving part (145). The main body driving part (145) provides the main body part (143) with a driving force so that the main body part (143) moves along the rail (141). For example, the main body driving part (145) may comprise a motor capable of forward and reverse rotation.

In addition, the cutting device (100) for an electrode base material may comprise a control part (190) adjusting the position of the cutting part (130) on the travel motion path based on sensing information from the defect sensing part (120).

Referring to Figures 6 to 8, the control part (190) may be provided so that when a defective portion (9) is sensed in the electrode base material (1), the cutting part (130) is moved to the defect cutting position (P2), and then the defective electrode (13) is cut from the electrode base material (1).

Referring to Figure 3, the control part (190) may be provided so that when the defective electrode (13) is removed from the electrode base material (1), the cutting part (130) is moved to the good product cutting position (P1), and then the normal electrode (10) is cut from the electrode base material (1).

The defect sensing part (120) may be disposed apart from the entry end (130a) of the cutting part (130). When the defect sensing part (120) senses a defective portion (9), it transmits a sensing signal to the control part (190).

The control part (190) may calculate a time point when a region containing the defective portion (9) in the electrode base material (1) is entered into the cutting part (130) based on the sensing position (Ps) of the defect sensing part (120) and the traveling speed of the electrode base material (1).

The control part (190) may obtain information on the unit electrode (A2) including the defective portion (9) based on the sensing information of the defect sensing part (120).

Referring to Figure 4, the defective electrode (13) is a unit electrode containing a defective portion (9) of the unit electrode (A2), which may be a region between a virtual first cutting line (C1) to be cut to the unit electrode (A2) and a virtual second cutting line (C2) spaced apart from the virtual first cutting line (C1) to include the defective portion (9).

Information on the unit electrode (A2) including the defective portion (9) may include position information of the virtual first cutting line (C1) and position information of the virtual second cutting line (C2). At this time, the gap between the first cutting line (C1) and the second cutting line (C2) may correspond to the length (L2) of the unit electrode (A2).

When a defective portion (9) is sensed while traveling of the electrode base material (1), the cutting device (100) for an electrode base material may remove, in a cutting process of cutting the electrode base material (1) into a plurality of unit electrodes (A1, A2), the defective electrode (13) including the defective portion (9) of the unit electrode (A2), and then cut the normal electrode (10) of the unit electrode (A1) again.

Referring to Figures 3 to 6, the cutting part (130) is provided to be reciprocally movable to be connected to or separated (disconnected) from the electrode discharge part (180).

The cutting part (130) is connected to the electrode discharge part (180) when moving to the good product cutting position (P1), and at the good product cutting position (P1), the pair of cutting members (131, 132) cuts the electrode base material (1) into the normal electrode (10).

Also, when the defective portion (9) is sensed, the cutting part (130) moves to the defect cutting position (P2), and at the defect cutting position (P2), the pair of cutting members (131, 132) cuts the electrode base material (1) into the defective electrode (13).

In addition, the control part (190) may control the operation of the main body driving part (145) based on sensing information from the defect sensing part (120).

Referring to Figures 3 and 6, for example, the control part (190) may adjust a movement direction and a movement distance of the cutting part (130) through the position adjusting part (140) by setting the position of the entry end (180a) of the electrode discharge part (180) as the reference position (P0).

Referring to Figure 6, when cutting the defective electrode (13), the position adjusting part (140) may move the main body part (143) backward (the reverse direction of the traveling direction of the electrode base material) to be spaced apart from the reference position (P0) by a first distance (D1). The first distance (D1) is the interval between the good product cutting position (P1) and the defect cutting position (P2).

Also, after cutting completion of the defective electrode (13), the position adjusting part (140) may move the main body part (143) forward (the traveling direction of the electrode base material) toward the electrode discharge part (180) at a position spaced apart from the electrode discharge part (180) by the first distance (D1).

In addition, the pair of cutting members (131, 132) may be installed on the main body part (143) to be movable in a direction perpendicular to the electrode base material (1).

Furthermore, the front-end roll part (150) and the rear-end roll part (160) may each be installed in the main body part (143). In this instance, the front-end roll part (150) and the rear-end roll part (160) are disposed on both sides of the pair of cutting members (131, 132). The front-end roll part (150) performs a function of guiding the travel motion of the electrode base material (1) so that the electrode base material (1) enters between the pair of cutting members (131, 132).

The front-end roll part (150) may comprise a pair of roll members provided to push the electrode base material (1) in the traveling direction (MD1) or the reverse traveling direction (MD2), where the pair of roll members is disposed above and below the electrode base material (1). In this document, the roll members constituting the front-end roll part (150) are referred to as front-end rolls (151, 152).

The rear-end roll part (160) may comprise a pair of roll members provided to push the normal electrode (10) or the defective electrode (13) in the traveling direction (MD1) or the reverse traveling direction (MD2) of the electrode base material (1), where the pair of roll members is disposed above and below the electrode base material (1). In this document, the roll members constituting the rear-end roll part (150) are referred to as rear-end rolls (161, 162).

As described above, the rear-end roll part (160) is located between the pair of cutting members (131, 132) and the electrode discharge part (180). In addition, the rear-end roll part (160) may be disposed between the pair of cutting members (131, 132) and the defect recovery part (170).

Referring to Figure 3, the defect recovery part (170) may be disposed at the rear end (discharge end) of the rear-end roll part (160). The defect recovery part (170) may be located at the bottom of the discharge end side of the pair of rear-end rolls (161, 162).

A pair of discharge rolls (181, 182) of the electrode discharge part (180) may be disposed above and below the passing normal electrode (10), and provided to push the normal electrode (10) in the traveling direction (MD1) or the reverse traveling direction (MD2) of the electrode base material (1). In addition, the normal electrode (10) pushed out by the pair of discharge rolls (181, 182) in the traveling direction (MD1) is stored in the electrode storage part (185).

The control part (190) controls the travel motion part (110) guiding the travel motion of the electrode base material (1), and the rotation directions and rotation speeds of the pair of front-end rolls (151, 152), the pair of rear-end rolls (161, 162), and the pair of discharge rolls (181, 182).

The control part (190) may control the operation of the travel motion part (110) so that the front end (1a) of the electrode base material (1) is spaced apart from the pair of cutting members (131, 132) by an expected cutting length (L1, L2) based on the position of the pair of cutting members (131, 132). At this time, the expected cutting length may be the first length (L1) of the normal electrode (10) or the second length (L2) of the defective electrode (13), where the first length (L1) and the second length (L2) may also be set to be the same.

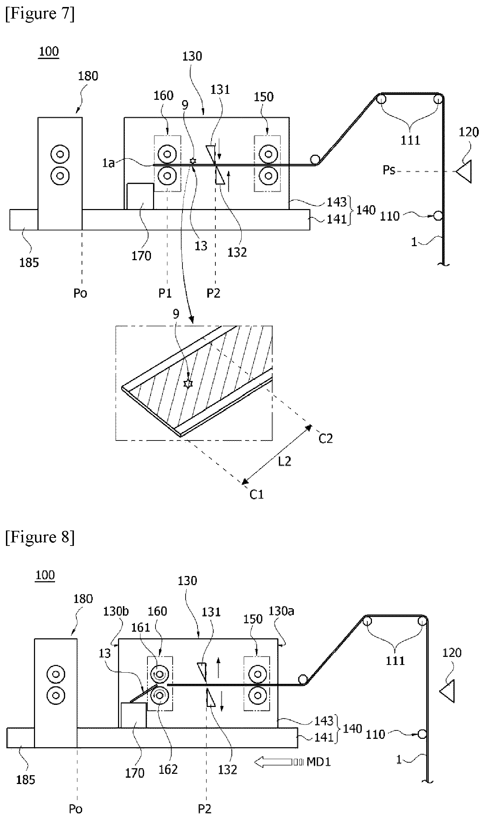

Figure 6 shows the operation that the cutting part moves from the good product cutting position to the defect cutting position, Figure 7 shows the operation of the cutting part in which the cutting part cuts the electrode base at the defect cutting position, and Figure 8 shows the operation that the rear-end roll part discharges the defective electrode to the recovery part.

When cutting the defective electrode (13), the control part (190) may control the operations of the travel motion part (110), the cutting part (130), and the electrode discharge part (180), respectively, as follows.

The control part (190) may reduce the rotation speed of the travel motion part (110) based on the sensing information of the defect sensing part (120). The control part (190) may obtain information on the defective electrode (13) including the defective portion (9) based on the sensing information of the defect sensing part (120).

At this time, the control part (190) may allow to cut the virtual first cutting line (C1) for cutting the defective electrode (13) when the cutting part (130) is located at the good product cutting position (P1). Thereafter, the control part (190) may allow to move the main body part (143) of the position adjusting part (140) so that the pair of cutting members (131, 132) is positioned at the defect cutting position (P2).

Referring to Figure 6, the position adjusting part (140) may allow to move the main body part (143) in a direction away from the electrode discharge part (180).

When the main body part (143) moves in the reverse traveling direction (MD2), the control part (190) may allow to move the electrode base material (1) in the reverse traveling direction (MD2), and may control the operation of the travel motion part (110) so that the virtual second cutting line (C2) of the electrode base material (1) is located at the defect cutting position (P2).

In addition, the control part (190) allows to stop the pair of front-end rolls (151, 152) and the pair of rear-end rolls (161, 162) for a preset cutting time. At this time, the control part (190) causes the pair of cutting members (131, 132) to cut the electrode base material (1) for a preset cutting time.

Referring to Figure 7, the pair of cutting members (131, 132) are moved to be closer toward each other in the base material vertical direction at the defect cutting position (P2), and cut the defective electrode (13) from the electrode base material (1).

Referring to Figure 8, when the defective electrode (13) is cut from the electrode base material (1), the pair of cutting members (131, 132) is returned to the original position. At the same time, the pair of rear-end rolls (161, 162) is rotated to push the defective electrode (13) in the traveling direction (MD1). In this instance, the defective electrodes (13) are discharged individually from the pair of rear-end rolls (161, 162) to the defect recovery part (170) due to the pushing force of the pair of rear-end rolls (161, 162).

Thereafter, the cutting device (100) for an electrode base material is provided to perform the process of cutting the normal electrode (10) again after removing the defective electrode (13) from the electrode base material (1).

When cutting the normal electrode (10), the control part (190) allows to move the pair of cutting members (131, 132) to the good product cutting position (P1), and controls the operation of the travel motion part (110) and the cutting part (130) to be capable of cutting the normal electrode (10) from the electrode base material (1) by the first length (L1).

The position of the pair of cutting members (131, 132) may be moved from the defect cutting position (P2) to the good product cutting position (P1) by the position adjusting part (140).

The travel motion part (110) may allow to travel the electrode base material (1) so that the front end (1a) of the electrode base material (1) enters the electrode discharge part (180) at the good product cutting position (P1). In addition, the control part (190) allows to stop the travel motion part (110) when cutting the normal electrode (10), and allows to stop the operation of the pair of discharge rolls (181, 182), the pair of front-end rolls (151, 152), and the pair of rear-end rolls (161, 162).

In addition, at the good product cutting position (P1), the pair of cutting members (131, 132) moves in a direction closer toward each other. The pair of cutting members (131, 132) cuts the normal region of the electrode base material (1) into the normal electrode (10).

After cutting the electrode base material (1) into the normal electrode (10), the pair of rear-end rolls (161, 162) and the pair of discharge rolls (181, 182) rotate to push the normal electrode (10) in the traveling direction (MD1). In this instance, the normal electrode (10) is discharged from the pair of discharge rolls (181, 182) to the electrode storage part (185) by the pushing force of the pair of discharge rolls (181, 182).

The normal electrodes (10) discharged into the electrode storage part (185) can later be manufactured into unit cells.

### Industrial Applicability

According to the cutting device for an electrode base material related to one example of the present invention, in the process of cutting the electrode base material into the plurality of unit electrodes, it is possible to remove the defective electrodes containing the defective portions among the unit electrodes based on defect sensing information of the defect sensing part.

## Claims

1. A cutting device for an electrode base material comprising:
a travel motion part (110) guiding a travel motion of the electrode base material (1) along a travel motion path; and
a defect sensing part (30) disposed on the travel motion path and provided to sense defective portions of the electrode base material (1),
**characterized by**
a cutting part (130) provided to cut the electrode base material (1) into a plurality of unit electrodes, provided to be movable along the travel motion path, and provided so that a good product cutting position (P1) for cutting a normal electrode among the plurality of unit electrodes and a defect cutting position (P2) for cutting a defective electrode including the defective portion are different;
an electrode discharge part (180) provided to discharge to the outside the normal electrode cut at the good product cutting position (P1); and
a defect recovery part (170) in which the defective electrode cut at the defect cutting position (P2) is stored.

2. The cutting device for an electrode base material according to claim 1, wherein
the cutting part (130) and the electrode discharge part (180) are provided to be connected to each other so that the normal electrode cut at the good product cutting position (P1) is delivered to the electrode discharge part (180).

3. The cutting device for an electrode base material according to claim 2, wherein
the cutting part (130) and the electrode discharge part (180) are provided to be disconnected to each other so that the defective electrode cut at the defect cutting position (P2) is not delivered to the electrode discharge part (180).

4. The cutting device for an electrode base material according to claim 1, wherein
the cutting part (130) is provided to move in a direction away from the electrode discharge part (180) when moving from the good product cutting position (P1) to the defect cutting position (P2).

5. The cutting device for an electrode base material according to claim 4, wherein
at the defect cutting position (P2), the defect recovery part (170) is provided to be exposed to the space between the cutting part (130) and the electrode discharge part (180).

6. The cutting device for an electrode base material according to claim 4, wherein
the cutting part (130) comprises a pair of cutting members (131, 132), and a rear-end roll part (160) disposed between the pair of cutting members (131, 132) and the electrode discharge part (180), and
the rear-end roll part (160) is provided to push the normal electrode into the electrode discharge part (180) at the good product cutting position (P1).

7. The cutting device for an electrode base material according to claim 6, wherein
the rear-end roll part (160) is provided to push the defective electrode into the defect recovery part (170) at the defect cutting position (P2).

8. The cutting device for an electrode base material according to claim 7, wherein
the defect recovery part (170) is provided at a location where the defective electrode passing through the rear-end roll part (160) falls, and thus is stored.

9. The cutting device for an electrode base material according to claim 6, wherein
the cutting part (130) further comprises a position adjusting part (140) adjusting the position of the pair of cutting members (131, 132) along the travel motion path.

10. The cutting device for an electrode base material according to claim 9, wherein
the position adjusting part (140) comprises a rail (141); and
a main body part (143) movably coupled to the rail (141) and on which the pair of cutting members (131, 132) is mounted.

11. The cutting device for an electrode base material according to claim 10, wherein
the main body part (143) is provided with the rear-end roll part (160), and
the pair of cutting members (131, 132) and the rear-end roll part (160) move integrally along the rail (141).

12. The cutting device for an electrode base material according to claim 1, wherein
the electrode discharge part (180) comprises a pair of discharge rolls (181, 182) for guiding the travel motion of the normal electrode; and
an electrode storage part (185) storing the normal electrode passing through the pair of discharge rolls (181, 182).

13. The cutting device for an electrode base material according to claim 1, comprising
a control part (190) provided to adjust the position of the cutting part (130) on the travel motion path based on sensing information from the defect sensing part (30).

14. The cutting device for an electrode base material according to claim 13, wherein
the control part (190) is provided so that when the defective portion is sensed in the electrode base material (1), the cutting part (130) is moved to the defect cutting position (P2), and then the defective electrode is cut from the electrode base material (1).

15. The cutting device for an electrode base material according to claim 14, wherein
the control part (190) is provided so that when the defective electrode is removed from the electrode base material (1), the cutting part (130) is moved to the good product cutting position (P1), and then the normal electrode is cut from the electrode base material (1).

## Patentansprüche

1. Schneidvorrichtung für ein Elektrodenbasismaterial, aufweisend:
einen Verfahrbewegungsteil (110), der eine Verfahrbewegung des Elektrodenbasismaterials (1) entlang eines Verfahrbewegungswegs führt; und
einen Fehlererfassungsteil (30), der auf dem Verfahrbewegungsweg angeordnet ist und bereitgestellt ist, um fehlerhafte Abschnitte des Elektrodenbasismaterials (1) zu erfassen,
**gekennzeichnet durch**
ein Schneidteil (130), das bereitgestellt ist, um das Elektrodenbasismaterial (1) in mehrere Einheitselektroden zu schneiden, bereitgestellt ist, um entlang des Verfahrbewegungswegs bewegbar zu sein, und bereitgestellt ist, so dass eine Gutprodukt-Schneidposition (P1) zum Schneiden einer normalen Elektrode aus den mehreren Einheitselektroden und eine Fehlerschneidposition (P2) zum Schneiden einer fehlerhaften Elektrode, die den fehlerhaften Abschnitt enthält, voneinander verschieden sind;
ein Elektrodenentladungsteil (180), das bereitgestellt ist, um die normale Elektrode, die an der Gutprodukt-Schneidposition (P1) geschnitten ist, nach außen zu entladen; und
ein Fehlerwiederherstellungsteil (170), in dem die fehlerhafte Elektrode, die an der Fehlerschneidposition (P2) geschnitten ist, gespeichert ist.

2. Schneidvorrichtung für ein Elektrodenbasismaterial nach Anspruch 1, wobei
das Schneidteil (130) und das Elektrodenentladungsteil (180) bereitgestellt sind, um miteinander verbunden zu werden, so dass die normale Elektrode, die an der Gutprodukt-Schneidposition (P1) geschnitten ist, an das Elektrodenentladungsteil (180) geliefert wird.

3. Schneidvorrichtung für ein Elektrodenbasismaterial nach Anspruch 2, wobei
das Schneidteil (130) und das Elektrodenentladungsteil (180) bereitgestellt sind, um voneinander getrennt zu werden, so dass die fehlerhafte Elektrode, die an der Fehlerschneidposition (P2) geschnitten ist, nicht an das Elektrodenentladungsteil (180) geliefert wird.

4. Schneidvorrichtung für ein Elektrodenbasismaterial nach Anspruch 1, wobei
das Schneidteil (130) bereitgestellt ist, um sich in einer Richtung weg von dem Elektrodenentladungsteil (180) zu bewegen, wenn es sich von der Gutprodukt-Schneidposition (P1) zu der Fehlerschneidposition (P2) bewegt.

5. Schneidvorrichtung für ein Elektrodenbasismaterial nach Anspruch 4, wobei
an der Fehlerschneidposition (P2) das Fehlerwiederherstellungsteil (170) bereitgestellt ist, um dem Raum zwischen dem Schneidteil (130) und dem Elektrodenentladungsteil (180) ausgesetzt zu sein.

6. Schneidvorrichtung für ein Elektrodenbasismaterial nach Anspruch 4, wobei
das Schneidteil (130) ein Paar von Schneidelementen (131, 132) und ein hinteres Rollenteil (160) aufweist, das zwischen dem Paar von Schneidelementen (131, 132) und dem Elektrodenentladungsteil (180) angeordnet ist, und
das hintere Rollenteil (160) bereitgestellt ist, um die normale Elektrode in das Elektrodenentladungsteil (180) an der Gutprodukt-Schneidposition (P1) zu drücken.

7. Schneidvorrichtung für ein Elektrodenbasismaterial nach Anspruch 6, wobei
das hintere Rollenteil (160) bereitgestellt ist, um die fehlerhafte Elektrode in das Fehlerwiederherstellungsteil (170) an der Fehlerschneidposition (P2) zu drücken.

8. Schneidvorrichtung für ein Elektrodenbasismaterial nach Anspruch 7, wobei
das Fehlerwiederherstellungsteil (170) an einer Stelle bereitgestellt ist, wo die fehlerhafte Elektrode, die durch das hintere Rollenteil (160) hindurchgeht, fällt und somit gespeichert ist.

9. Schneidvorrichtung für ein Elektrodenbasismaterial nach Anspruch 6, wobei
das Schneidteil (130) ferner ein Positionseinstellteil (140) aufweist, das die Position des Paars von Schneidelementen (131, 132) entlang des Verfahrbewegungswegs einstellt.

10. Schneidvorrichtung für ein Elektrodenbasismaterial nach Anspruch 9, wobei
das Positionseinstellteil (140) eine Schiene (141) aufweist; und
ein Hauptkörperteil (143), das beweglich mit der Schiene (141) gekoppelt ist und auf dem das Paar von Schneidelementen (131, 132) montiert ist.

11. Schneidvorrichtung für ein Elektrodenbasismaterial nach Anspruch 10, wobei das Hauptkörperteil (143) mit dem hinteren Rollenteil (160) bereitgestellt ist, und das Paar von Schneidelementen (131, 132) und das hintere Rollenteil (160) sich integral entlang der Schiene (141) bewegen.

12. Schneidvorrichtung für ein Elektrodenbasismaterial nach Anspruch 1, wobei
das Elektrodenentladungsteil (180) ein Paar von Entladungsrollen (181, 182) zum Führen der Verfahrbewegung der normalen Elektrode aufweist; und
ein Elektrodenspeicherteil (185), das die normale Elektrode speichert, die durch das Paar von Entladungsrollen (181, 182) hindurchgeht.

13. Schneidvorrichtung für ein Elektrodenbasismaterial nach Anspruch 1, aufweisend
ein Steuerteil (190), das bereitgestellt ist, um die Position des Schneidteils (130) auf dem Verfahrbewegungsweg basierend auf Erfassungsinformationen von dem Fehlererfassungsteil (30) einzustellen.

14. Schneidvorrichtung für ein Elektrodenbasismaterial nach Anspruch 13, wobei
das Steuerteil (190) bereitgestellt ist, so dass, wenn der fehlerhafte Abschnitt in dem Elektrodenbasismaterial (1) erfasst wird, das Schneidteil (130) zu der Fehlerschneidposition (P2) bewegt wird und dann die fehlerhafte Elektrode von dem Elektrodenbasismaterial (1) geschnitten wird.

15. Schneidvorrichtung für ein Elektrodenbasismaterial nach Anspruch 14, wobei
das Steuerteil (190) bereitgestellt ist, so dass, wenn die fehlerhafte Elektrode von dem Elektrodenbasismaterial (1) entfernt wird, das Schneidteil (130) zu der Gutprodukt-Schneidposition (P1) bewegt wird und dann die normale Elektrode von dem Elektrodenbasismaterial (1) geschnitten wird.

## Revendications

1. Dispositif de coupe pour un matériau de base d'électrode, comprenant :
un élément de mouvement de déplacement (110) guidant un mouvement de déplacement du matériau de base d'électrode (1) le long d'un chemin de mouvement de déplacement ; et
un élément de détection de défauts (30) disposé sur le chemin de mouvement de déplacement, et agencé pour détecter des parties défectueuses du matériau de base d'électrode (1),
**caractérisé par**
un dispositif de coupe (130) agencé pour couper le matériau de base d'électrode (1) en une pluralité d'électrodes individuelles, agencées pour pouvoir être déplacées le long d'un chemin de mouvement de déplacement, et agencées de sorte qu'une position de coupe de bon produit (P1), pour couper une électrode normale parmi la pluralité d'électrodes individuelles, et une position de coupe de défauts (P2), pour couper une électrode défectueuse comprenant la partie défectueuse, soient différentes ;
un dispositif d'évacuation d'électrode (180) agencé pour évacuer à l'extérieur l'électrode normale coupée à la position de coupe de bon produit (P1) ; et
un dispositif de correction de défaut (170) dans lequel l'électrode défectueuse coupée à la position de coupe de défauts (P2) est stockée.

2. Dispositif de coupe pour un matériau de base d'électrode selon la revendication 1,
le dispositif de coupe (130) et le dispositif d'évacuation d'électrode (180) étant agencés pour être connectés l'un à l'autre afin que l'électrode normale, coupée à la position de coupe de bon produit (P1), soit délivrée au dispositif d'évacuation d'électrode (180).

3. Dispositif de coupe pour un matériau de base d'électrode selon la revendication 2,
le dispositif de coupe (130) et le dispositif d'évacuation d'électrode (180) étant agencés pour être déconnectés l'un de l'autre afin que l'électrode défectueuse coupée à la position de coupe de défauts (P2) ne soit pas délivrée au dispositif d'évacuation d'électrodes (180).

4. Dispositif de coupe pour un matériau de base d'électrode selon la revendication 1,
le dispositif de coupe (130) étant agencé pour se déplacer dans le sens opposé au dispositif d'évacuation d'électrode (180) lors du déplacement de la position de coupe de bon produit (P1) à la position de coupe de défaut (P2).

5. Dispositif de coupe pour un matériau de base d'électrode selon la revendication 4, dans lequel,
à la position de coupe de défaut (P2), le dispositif de correction de défaut (170) est agencé pour être exposé à l'espace entre le dispositif de coupe (130) et le dispositif d'évacuation d'électrode (180).

6. Dispositif de coupe pour un matériau de base d'électrode selon la revendication 4, dans lequel
le dispositif de coupe (130) comprenant une paire d'éléments de coupe (131, 132), et une partie de cylindre postérieur (160) étant disposée entre la paire d'éléments de coupe (131, 132) et le dispositif d'évacuation d'électrode (180), et
la partie de cylindre postérieur (160) étant agencée pour pousser l'électrode normale dans le dispositif d'évacuation d'électrode (180) à la position de coupe de bon produit (P1).

7. Dispositif de coupe pour un matériau de base d'électrode selon la revendication 6, dans lequel
la partie de cylindre postérieur (160) étant agencée pour pousser l'électrode défectueuse dans le dispositif de correction de défaut (170) à la position de coupe de défaut (P2).

8. Dispositif de coupe pour un matériau de base d'électrode selon la revendication 7,
le dispositif de correction de défaut (170) étant agencé dans un emplacement où l'électrode défectueuse passant à travers la partie de cylindre postérieur (160) tombe, en étant ainsi stockée.

9. Dispositif de coupe pour un matériau de base d'électrode selon la revendication 6,
le dispositif de coupe (130) comprenant en outre un élément d'ajustement de la position (140) ajustant la position de la paire d'éléments de coupe (131, 132) le long du chemin de mouvement de déplacement.

10. Dispositif de coupe pour un matériau de base d'électrode selon la revendication 9,
l'élément d'ajustement de la position (140) comprenant une glissière (141) ; et
une partie de corps principal (143) couplée de façon mobile à la glissière (141) et sur laquelle est montée la paire d'éléments de coupe (131, 132).

11. Dispositif de coupe pour un matériau de base d'électrode selon la revendication 10,
la partie de corps principal (143) étant dotée de la partie de cylindre postérieur (160), et
la paire d'éléments de coupe (131, 132) et la partie de cylindre postérieur (160) se déplaçant de façon intégrale le long de la glissière (141).

12. Dispositif de coupe pour un matériau de base d'électrode selon la revendication 1,
le dispositif l'évacuation d'électrodes (180) comprenant une paire de cylindres de décharge (181, 182) pour guider le mouvement de déplacement de l'électrode normale ; et
un élément de stockage d'électrode (185) stockant l'électrode normale qui passe à travers la paire de cylindres de décharge (181, 182).

13. Dispositif de coupe pour un matériau de base d'électrode selon la revendication 1, comprenant :
un module de commande (190) agencé pour ajuster la position du dispositif de coupe (130) sur le chemin du mouvement de déplacement d'après des informations de détection provenant de l'élément de détection de défauts (30).

14. Dispositif de coupe pour un matériau de base d'électrode selon la revendication 13,
le module de commande (190) étant agencé de sorte que, lorsque la partie défectueuse est détectée dans le matériau de base d'électrode (1), le dispositif de coupe (130) soit déplacé sur la position de coupe de défauts (P2), l'électrode défectueuse étant alors coupée du matériau de base d'électrode (1).

15. Dispositif de coupe pour un matériau de base d'électrode selon la revendication 14,
le module de commande (190) étant agencé de sorte que l'électrode défectueuse soit enlevée du matériau de base d'électrode (1), le dispositif de coupe (130) étant déplacé sur la position de coupe de bon produit (P1), et l'électrode normale étant alors coupée du matériau de base d'électrode (1).
